# EUROPEAN PATENT SPECIFICATION

(11) **EP 3 800 387 B1**
(45) Date of publication and mention of the grant of the patent: **07.09.2022**
(21) Application number: 20198030.7
(22) Date of filing: 24.09.2020
(51) Int. Cl.: F16K 17/04, F16K 17/06, F16K 31/08, F24D 19/10

(54) **BY-PASS VALVE**
ABBLASEVENTIL
SOUPAPE DE DÉRIVATION

(30) Priority: 01.10.2019 SK 1452019
(43) Date of publication of application: 07.04.2021
(73) Proprietor: Protherm Production s.r.o., 909 01 Skalica (SK); Vaillant GmbH, 42859 Remscheid (DE)
(72) Inventor: Vanek, Anton, 909 01 SKALICA (SK)
(74) Representative: Popp, Carsten

(56) References cited:
- EP-A1- 2 835 599
- EP-B1- 2 835 599
- US-A- 3 877 478

## Description

### Field of the invention

The invention concerns the design and control of opening of the bypass valve to ensure the bypass function, in particular, in hot water heating systems.

### Background of the invention

Heating devices are known in the prior art, in particular hot-water boilers, with a heat source, with a water circulation pump and with one or two heating circuits, one circuit being intended for space heating and the other circuit being intended for domestic hot water heating. In both cases, the heated water is supplied to the circuits via a common primary heat exchanger and, in the case of domestic hot water heating, is subsequently also distributed to the secondary heat exchanger.

In prior art hot water heating systems, a separate bypass valve is used to prevent damage to the heating system at high pressure differences (hereinafter only differential pressures) occurring in the system of radiators and their thermostatic heads or upon an emergency shutdown of the system.

If the bypass valve is set to a certain differential pressure, it performs a protective function in such a way that the bypass valve responds to a sudden increase in the differential pressure and opens and passes the heated heating water through the bypass channel when the set differential pressure is reached. The bypass valve ensures discharge of hot water from the primary heat exchanger inside the heating system until the heating system evaluates the situation with its own protective elements, responds and shuts off the heating mode; current heating systems have the timing set at approximately 5 seconds. This heating water discharge inside the system protects the primary heat exchanger against potential overheating and destruction.

Since each heating system is unique and characterized by a different number of radiators, filters and other additional equipment, bypass valve settings need to be adjusted so that the heating system is able to operate as efficiently as possible.

The bypass valve is connected to the system via its own connections, or it is a part of the hydraulic module and the connection to the bypass channel is realized within the module. An example of the connection of a bypass valve in a bypass channel in a heating device is disclosed, for example, in EP2835599 A1.

According to the prior state of the art, the main part of bypass valves consists of a linear compressed coil spring (further referred as linear spring) and a movably mounted sealing element (piston, plate, cone, etc.) where the uncompressed spring keeps the sealing element in the closed position. The spring bias corresponds to the required pressure at which the bypass valve opens. Different spring designs meet different requirements for the value of the differential pressure in the system. The bypass valve is equipped with a suitable linear spring to ensure required system parameters.

The spring is installed inside the valve housing and is permanently exposed to the adverse effects of hot water. Calcifications may accumulate on the spring and cause malfunctioning of the valve. The mechanical properties of the spring, such as stiffness, decrease over time due to the pressure of the medium. Moreover, changes in the heating system require replacement of the spring.

Document US3877478A also discloses a known bypass valve comprising permanent magnets.

The task of the presented technical solution is to design a valve ensuring the bypass function and able to maintain its functional properties despite negative physical influences of the hot water environment. At the same time, the new solution enhances options for setting the volume of water flowing through the bypass valve when compared to the prior art.

### Summary of the invention

The invention is based on the replacement of the linear spring in the valve by another mechanism that ensures opening of the valve when the differential pressure of water is reached at its inlet. The use of the magnetic repulsive force between two like poles of two magnets represents a suitable solution. In the present technical solution, the linear spring is replaced by a pair of permanent magnets facing each other with like poles.

The opening pressure of the bypass valve is thus set based on the distance between the two magnets where the permanent magnet placed in the aqueous environment is made of a water-resistant material or has a water-resistant surface treatment.

The magnetic force between the permanent magnets is permanent, continuous, and adjustable. For example, neodymium magnets are excellently resistant to external demagnetizing influences and maintain a permanent magnetism level under normal conditions.

By using permanent magnets, it is possible to eliminate the problem that causes wear or damage to the spring exposed to the aqueous environment.

To set the function of the valve and the volume of water flow through the valve, it is necessary to know the characteristics of the force required to compress the spring or bring two magnets closer.

Linear springs are characterized by linearly increasing spring resistance that results from increasing compression of the spring. Progressive springs represent another type and they change their resistance to increasing pressure slowly at the beginning and then faster (steeper), i.e. exponentially.

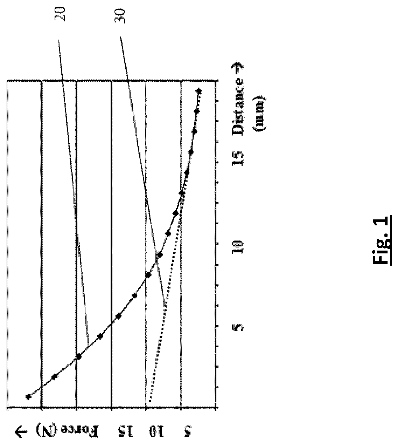

A comparison of the characteristics of linear and progressive springs is shown in Figure 1. The graph shows the dependence of the amount of force required to compress the spring on the distance of the ends of the springs (extension).

It is known that the characteristics of the force required to overcome the distance between two magnets facing each other with like poles is comparable to the characteristics of a progressive spring.

With the complete replacement of the linear spring by a pair of magnets, due to this characteristic as shown in Figure 1, the bypass valve would operate in a smaller working range than with the linear spring, the steep part of the characteristic could not be used.

Therefore, in the present solution, a two-stage valve control based on the distribution of working pressures is advantageously used.

A linear spring located outside the water environment in the watertight cassette is added to the pair of magnets in the construction of the valve. This arrangement results in better sensitivity within the process of desired pressure setting.

The first stage of valve opening will depend on the setting of the mutual distance between the permanent magnets; the distance between the permanent magnets can be set to values corresponding to the water pressure, e.g. 17 kPa, 25 kPa or 35 kPa J Z . The permanent magnets used then have corresponding parameters indicating the magnetic force, i.e. from N35 to N55.

The second stage of valve opening will depend on the characteristics of the used linear spring located outside the aqueous environment; its setting may correspond, for instance, to working pressures, e.g. from 40 to 70 kPa . The linear spring can be preset accordingly to the circulation pump discharge and its bias may be changed by means of a threaded plug which closes the waterproof cassette.

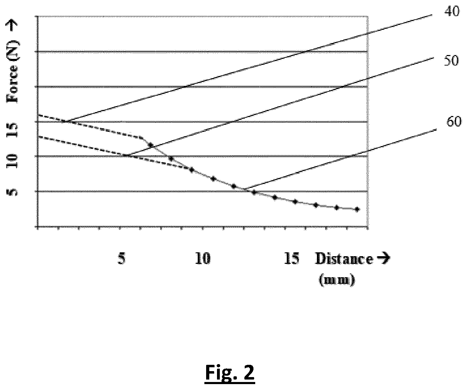

The resulting opening characteristics of this two-stage fluid pressure controlled valve is shown in Figure 2, the opening characteristics for two different spring bias settings being indicated.

### Brief description of drawings

The invention is explained in more detail with the help of pictures but without limitation to them:
Figure 1- Shows graphically the characteristics of a linear spring and a progressive spring while the non-linear characteristic of the progressive spring corresponds to the characteristic of a pair of permanent magnets facing each other with like poles
Figure 2 - Shows graphically the opening characteristics of the bypass valve with the two-stage control according to the disclosed invention
Figure 3 - Shows schematically a bypass valve structure model according to the presented invention
Figure 4 - Shows schematically a bypass valve model according to the presented invention in three working phases:
   a) the bypass valve is closed
   b) the bypass valve opened partially on the basis of the setting mutual distance and force of the permanent magnets in the first working interval
   b) the bypass valve opened fully based on the setting of the mutual distance of the permanent magnets and force of the linear spring in the second working interval

### Description of the embodiment example

The bypass valve 100 is composed of a valve housing 1 defining a valve chamber 2, an inlet opening 3 and an outlet opening 4 being arranged in the wall of the valve housing 1, both openings 3, 4 being connected to the valve chamber 2. The valve chamber 2 contains the piston 7 that is movably arranged in it, the sealing surface of the piston 7 is resting on the valve housing 1 wall and on the inlet opening 3.

The piston 7 is provided with a first permanent magnet 5 on the side facing away from the inlet opening 3. The first permanent magnet 5 is made of a water-resistant material or has a water-resistant surface treatment.

A waterproof cassette 9 is equipped with a second permanent magnet 6 and with a linear spring 8 and it is tightly inserted into the valve chamber 2. The waterproof cassette 9 is closed with the plug 10 and the spring 8 is clamped between the second permanent magnet 6 and the plug 10.

The waterproof cassette 9 is placed in the bypass valve 100 so that it does not extend into any part of the valve chamber 2 in which the inlet opening 3 and the outlet opening 4 are arranged.

Advantageously, the plug 10 is provided with a thread for precise setting of the linear spring 8 bias.

The waterproof cassette 9 is inserted into the valve chamber 2 so that the first permanent magnet 5 and the second permanent magnet 6 are arranged at a distance allowing mutual force interaction, they face each other with like poles and their force interaction is repulsive.

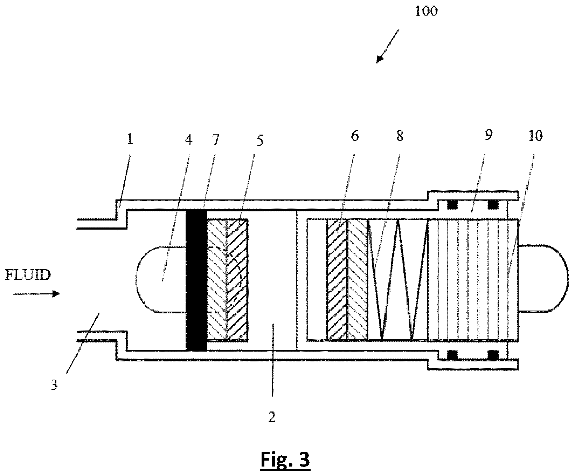

Figure 3 shows the water pressure acting on the inlet opening 3 in the direction indicated by an arrow.

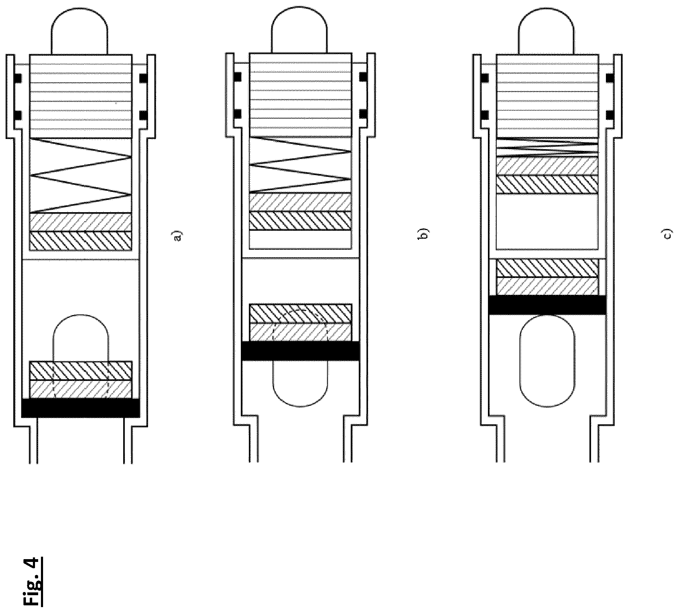

As long as the water pressure acting on the inlet opening 3 is lower than the system's differential pressure triggering the bypass function, the piston 7 keeps the inlet opening 3 closed and the repulsive force of the magnets keeps the piston 7 with its sealing surface inside the valve chamber 2 in a position preventing mutual interconnection between the inlet opening 3 and outlet opening 4. This working phase is shown schematically on the Figure 4 - a).

When the pressure of the water acting on the inlet opening 3 reaches the value triggering the bypass function, the piston 7 and the first permanent magnet 5 move simultaneously in the water pressure direction and water flows from the inlet opening 3 to the outlet opening 4 via the valve chamber 2 into the bypass channel of the heating system. The minimum possible distance between the permanent magnets 5, 6 upon the values of the water pressure in the system is determined based on non-linear characteristics 20, 60 for different magnet force ranges. This working phase is shown schematically on the Figure 4 - b).

To completely open the flow of water through the valve chamber 2, the differential water pressure acts against the resistance of the spring 8 so that the second permanent magnet 6 slides in the waterproof cassette 9 and compresses the spring 8. In this working interval of the bypass valve 100, the linear characteristic 40 or 50 of the spring 8 is applied depending on its bias. This working phase is shown schematically on the Figure 4 - c).

It is clear that the model does not include all possible alternative applications falling within the scope of protection, it is neither limited to a specific shape or design of permanent magnets and spring nor to the medium for which the valve is used. The bypass valve is also suitable for use with media other than hot water.

The bypass valve controlled by the working medium pressure with the possibility to set its flow through the valve based on two working pressure levels is particularly suitable for hot water heating systems and also for other equipment requiring a bypass function. Due to its design, the disclosed bypass valve is more resistant to the influence of the medium than spring valves and therefore it can also be used for other equipment than hot water heating systems and media other than hot water. The design and surface treatment of permanent magnets are to meet the requirements of individual applications.

### List of reference marks

1 valve housing
2 valve chamber
3 inlet opening
4 outlet opening
5 first permanent magnet
6 second permanent magnet
7 piston
8 spring
9 waterproof casette
10 plug
20 characteristics of a pair of permanent magnets facing each other with like poles
30 linear coil spring characteristic
40 opening characteristics of the bypass valve with permanent magnets in the second working interval (the spring is set to a higher bias)
50 opening characteristics of the bypass valve with permanent magnets in the second working interval (the spring is set to a lower bias)
60 opening characteristics of the bypass valve with permanent magnets in the first working interval
100 bypass valve

## Claims

1. A bypass valve (100), comprising
- a valve housing (1) defining a valve chamber (2), wherein the valve housing (1) wall includes an inlet opening (3) and an outlet opening (4) and both openings (3, 4) are connected with the valve chamber (2),
- a piston (7), which is is movably arranged in the valve chamber (2), comprising a sealing surface resting on the wall of the valve housing (1) and on the inlet opening (3),
- a waterproof cassette (9) being closed by a plug (10),
wherein the piston (7) is provided with the first permanent magnet (5) being arranged on the side of the piston (7) facing away from the inlet opening (3), and
the waterproof cassette (9) is provided with a second permanent magnet (6) and a linear spring (8), wherein the spring (8) is clamped between the second permanent magnet (6) and the plug (10) and wherein the first permanent magnet (5) and the second permanent magnet (6) face each other with like poles,
**characterized in that**,
the waterproof cassette (9) is tightly inserted into the valve chamber (2) and it does not extend into any part of the valve chamber (2) in which the inlet opening (3) and the outlet opening (4) are arranged.

2. The bypass valve (100) according the claim 1,
**characterized in that** the plug (10) is provided with a thread for setting the bias of the linear spring (8).

3. The bypass valve (100) according the claim 1,
**characterized in that** the pair of permanent magnets (5, 6) is used to adjust
opening during the first working interval and the linear spring (8) is used to adjust opening during the second working interval.

## Patentansprüche

1. Umgehungsventil (100), das Folgendes umfasst
- ein Ventilgehäuse (1), das eine Ventilkammer (2) definiert, wobei die Wand des Ventilgehäuses (1) eine Einlassöffnung (3) und eine Auslassöffnung (4) beinhaltet, und beide Öffnungen (3, 4) mit der Ventilkammer (2) verbunden sind,
- einen Kolben (7), der bewegbar in der Ventilkammer (2) eingerichtet ist, der eine Dichtungsoberfläche umfasst, die auf der Wand des Ventilgehäuses (1) und auf der Einlassöffnung (3) ruht,
- eine wasserdichte Kassette (9), die von einem Stopfen (10) verschlossen ist, wobei der Kolben (7) mit dem ersten Dauermagnet (5) versehen ist, der auf der Seite des Kolbens (7), die von der Einlassöffnung (3) abgewandt ist, bereitgestellt ist, und
die wasserdichte Kassette (9) mit einem zweiten Dauermagnet (6) und einer linearen Feder (8) versehen ist, wobei die Feder (8) zwischen den zweiten Dauermagnet (6) und den Stopfen (10) geklemmt ist, und wobei der erste Dauermagnet (5) und der zweite Dauermagnet (6) einander mit gleichen Polen gegenüberliegen,
**dadurch gekennzeichnet, dass**,
die wasserdichte Kassette (9) dicht in die Ventilkammer (2) eingesetzt ist und sich nicht in einen Teil der Ventilkammer (2) erstreckt, in dem die Einlassöffnung (3) und die Auslassöffnung (4) eingerichtet sind.

2. Umgehungsventil (100) nach Anspruch 1,
**dadurch gekennzeichnet, dass** der Stopfen (10) mit einem Gewinde zum Einstellen der Vorspannung der linearen Feder (8) versehen ist.

3. Umgehungsventil (100) nach Anspruch 1,
**dadurch gekennzeichnet, dass** das Paar von Dauermagneten (5, 6) verwendet wird, um das Öffnen während des ersten Arbeitsintervalls einzustellen, und die lineare Feder (8) dazu verwendet wird, das Öffnen während des zweiten Arbeitsintervalls einzustellen.

## Revendications

1. Soupape de dérivation (100), comprenant :
- un boîtier de soupape (1) définissant une chambre de soupape (2), dans laquelle la paroi du boîtier de soupape (1) inclut une ouverture d'entrée (3) et une ouverture de sortie (4) et les deux ouvertures (3, 4) sont raccordées à la chambre de soupape (2),
- un piston (7), qui est agencé de façon mobile dans la chambre de soupape (2), comprenant une surface d'étanchéité reposant sur la paroi du boîtier de soupape (1) et sur l'ouverture d'entrée (3),
- une cassette imperméable à l'eau (9) fermée par un obturateur (10),
dans laquelle le piston (7) est pourvu du premier aimant permanent (5) agencé sur le côté du piston (7) faisant face à l'opposé de l'ouverture d'entrée (3), et
la cassette imperméable à l'eau (9) est pourvue d'un second aimant permanent (6) et d'un ressort linéaire (8), dans laquelle le ressort (8) est serré entre le second aimant permanent (6) et l'obturateur (10) et dans laquelle le premier aimant permanent (5) et le second aimant permanent (6) font face l'un à l'autre comme des pôles,
**caractérisée en ce que**,
la cassette imperméable à l'eau (9) est insérée de façon étanche dans la chambre de soupape (2) et elle ne s'étend dans aucune partie de la chambre de soupape (2) dans laquelle l'ouverture d'entrée (3) et l'ouverture de sortie (4) sont agencées.

2. Soupape de dérivation (100) selon la revendication 1,
**caractérisée en ce que** l'obturateur (10) est pourvu d'un filet pour régler la sollicitation du ressort linéaire (8).

3. Soupape de dérivation (100) selon la revendication 1,
**caractérisée en ce que** la paire d'aimants permanents (5, 6) est utilisée pour ajuster une ouverture durant le premier intervalle de fonctionnement et le ressort linéaire (8) est utilisé pour ajuster une ouverture durant le second intervalle de fonctionnement.
